Europäisches Patentamt

European Patent Office

Office européen des brevets

(11) Publication number: **0 379 255**
**A2**

## EUROPEAN PATENT APPLICATION

(21) Application number: **90200099.1**

(22) Date of filing: **16.01.90**

(51) Int. Cl.⁵: **C08L 67/02, C08L 25/12, C08L 33/20**

(30) Priority: **19.01.89 NL 8900131**

(43) Date of publication of application:
**25.07.90 Bulletin 90/30**

(84) Designated Contracting States:
**BE DE FR GB IT NL SE**

(71) Applicant: **THE DOW CHEMICAL COMPANY**
**2030 Dow Center Abbott Road P.O. Box 1967**
**Midland Michigan 48640-1967(US)** ·

(72) Inventor: **Patel, Hitendra**
**12 Surrey Road North-Harrow**
**Middlesex HA1 4NH(GB)**
Inventor: **Reunis, Albert René**
**Janseniuslaan 75**
**NL-4561 NL Hulst(NL)**

(74) Representative: **de Jong, Nicolaas Henricus**
**Maria**
**Dow Benelux N.V. Patent Department P.O.**
**Box 48**
**NL-4530 AA Terneuzen(NL)**

(54) **Thermoplastic resin composition.**

(57) Thermoplastic resin composition and shaped object made thereof comprising 1-99 parts by weight of a monovinyl aromatic monomer-unsaturated nitrile copolymer and 99-1 parts by weight of a copolyester derived from an aromatic polycarboxylic compound, ethylene glycol and an additional C3-20 (cyclo)aliphatic glycol. The copolymer has a monovinyl aromatic monomer content of about 20-98 parts by weight and an unsaturated nitrile content of about 80-2 parts by weight. The copolyester contains in its glycol portion about 97-5 mole % of ethylene glycol residues and about 3-95 mole % of residues of the additional glycol.

EP 0 379 255 A2

## THERMOPLASTIC RESIN COMPOSITION

The invention relates to a novel thermoplastic resin composition, and to a shaped article of such a composition.

Monovinyl aromatic monomer-unsaturated nitrile copolymers typified by styrene-acrylonitrile copolymers have found wide use as thermo-processable materials in many different kinds of applications wherein it is desired to have a chemical resistant, rigid, generally transparent and/or heat resistant polymer, such as for example measuring cups, brush handles, dialyzer housings, cosmetic jars and battery boxes. This copolymer material is relatively easy to process. Although these copolymers have excellent properties in most of their applications, on the other hand, in specific applications a drawback can be their relative brittleness. This is for instance the case in applications where an improved practical toughness is required, such as in certain types of containers, refrigerator parts and industrial packaging. With practical toughness is meant that the material is capable of resisting the mechanical and/or thermal strains during normal use. For these applications more expensive materials such as transparent acrylonitrile-butadiene-styrene copolymers, impact-modified polymethyl methacrylates and in some cases polycarbonates are currently used.

Another thermo-processable polymeric material is a copolyester derived from a polycarboxylic acid or ester, such as terephthalic acid or ester, ethylene glycol and at least one additional glycol, such as 1,4-cyclohexanedimethanol (which can also be regarded as a glycol-modified polyethylene terephthalate). This type of copolyester has in general a low stiffness but good impact strength. These copolyesters can also be transparent and are used for a variety of applications including the production of packaging films and beverage containers. A major disadvantage of these glycol-modified polyethylene terephthalate copolyesters is that they have relatively poor heat properties. Therefore, there is a demand for a heat-modified version of these copolyesters, which version for instance may be used for hot-fillable packaging applications.

According to the present invention novel thermoplastic resin compositions have been found which have a desirable combination of mechanical and thermal properties and can be tailored to the various customer needs.

According to the present invention the thermoplastic resin composition comprises from 1 to 99 parts by weight of a monovinyl aromatic monomer-unsaturated nitrile copolymer wherein the monovinyl aromatic monomer content varies from about 20 to 98 parts by weight and the unsaturated nitrile content from about 80 to 2 parts by weight, and from 99 to 1 parts by weight of a copolyester derived from an aromatic polycarboxylic compound, ethylene glycol and an additional glycol selected from the group of aliphatic and cycloaliphatic glycols having from 3 to 20 carbon atoms, the 2,2-dimethyl-1,3-propanediol being excluded, the glycol portion of the copolyester containing about 97 to 5 mole % of ethylene glycol residues and about 3 to 95 mole % of residues of the additional glycol.

When the amount of copolymer predominates in the composition, the copolyester acts as a toughness-modifier for the normally heat-resistive, but relatively brittle copolymer. At relatively high levels of copolyester the copolymer functions as a modifier to increase heat resistance of the copolyester while retaining its good mechanical properties.

Due to the improved properties of the thermoplastic resin composition of the present invention, a range of applications becomes available for which, heretofore, over-designed resin compositions had to be used in order to get satisfactory results.

In the monovinyl aromatic monomer-unsaturated nitrile copolymer for use in the compositions of the present invention by the term "monovinyl aromatic monomer" is meant a monovinyl aromatic compound having the general formula $Ar-C(R)=CH_2$, wherein Ar represents an aromatic hydrocarbon radical, or an aromatic halohydrocarbon radical of the benzene series, and R is hydrogen or a hydrocarbon radical such as e.g. methyl. Examples of such monovinyl aromatic monomers include styrene, ortho-, meta- and para-methylstyrene, α-methylstyrene, ortho-, meta- and para-ethylstyrene, -vinylxylene, -chlorostyrene, -bromostyrene, and the like.

By "unsaturated nitrile" is meant an organic cyanide in which the CN group is attached to a hydrocarbon radical containing at least one ethylenically unsaturated double bond. Examples of unsaturated nitrile compounds include acrylonitrile and methacrylonitrile.

In general, the monovinyl aromatic unsaturated nitrile copolymer, and especially styrene-acrylonitrile copolymers have an unsaturated nitrile content, and especially acrylonitrile content, of about 2-80 parts by weight. Preferably, the monovinyl aromatic monomer-unsaturated nitrile copolymer is a styrene-acrylonitrile copolymer having an acrylonitrile content from about 10 to 50 parts by weight and a styrene content from about 90 to 50 parts by weight. More preferably the acrylonitrile content of the styrene-acrylonitrile copolymer lies between about 20 and 40 parts by weight. In this range the copolymer material has an excellent transparency and is virtually colorless. Examples of resins that are very well suited for incorporation in the present compositions are the various TYRIL* (*trademark of The Dow Chemical Company) styrene-acrylonitrile copolymer grades.

The monovinyl aromatic monomer-unsatured nitrile copolymer, and more in particular the styrene-acrylonitrile copolymer, for use in the present composition is readily prepared employing appropriate amounts of the respective monomers in any of the well known techniques. Monomers, catalysts and solvents of commercial purity are satisfactory. Suitable polymerization techniques and apparatuses are described in US patent nos. 2 739 142, 2 769 804, 2 989 517, 4 068 064, 4 243 781 and 4 332 924.

The copolyester for use in the present thermoplastic resin composition is a copolyester of an aromatic polycarboxylic compound, ethylene glycol and an additional glycol. The aromatic polycarboxylic compound preferably is an aromatic dicarboxylic acid and more preferably terephthalic acid.

In addition to the main polycarboxylic acid, preferably terephthalic acid, the copolyester resin can also contain minor amounts of other polycarboxylic acids. The acid portion of the copolyesters used in this invention may be modified with up to about 30 mole % of one or more other aliphatic, alicyclic or aromatic dicarboxylic acids such as isophthalic acid, 2,6-naphthalenedicarboxylic acid, cis or trans 1,4-cyclohexanedicarboxylic acid, monochloroterephthalic acid, dichloroterephthalic acid, methylterephthalic acid, dimethylterephthalic acid, 4,4'-diphenyldicarboxylic acid, adipic acid, azelaic acid, and dodecanedicarboxylic acid. For preparation of the copolyester one can start from the acid compound but also from an ester or other reactive acid derivative thereof.

The copolyesters for use in the thermoplastic resin composition of this invention contain in their glycol or diol portion 97-5 mole % of ethylene glycol residues and 3-95 mole % of residues of at least one additional glycol. The additional glycol(s) is (are) selected from aliphatic and cycloaliphatic glycols having 3-20 carbon atoms, with the exclusion of 2,2-dimethyl-1,3-propanediol, such as for example aliphatic glycols such as 1,2- or 1,3-propanediol, 1,4-butanediol, 1,5-pentanediol and 1,6-hexanediol; cycloaliphatic glycols such as 1,4-cyclohexanedimethanol, or other suitable diols. Preferably, the additional glycol is a cycloaliphatic glycol and more preferably 1,4-cyclohexanedimethanol. Most preferably in the copolyester for use in the present thermoplastic resin composition the aromatic polycarboxylic compound is terephthalic acid or derivative thereof and the additional glycol in the copolyestor glycol portion is 1,4-cyclohexanedimethanol. Of course, for the preparation of the copolyester also other reactive glycol derivatives may be used that yield the same glycol residue in the copolyester produced. Further also minor portions of condensed glycols, such as for example diethylene glycol, may be present in the copolyester.

In the thermoplastic composition of the present invention the glycol portion of the copolyester, and especially of the terephthalic acid derived copolyester, preferably contains from 80 to 20 mole % of residues of ethylene glycol and from 20 to 80 mole % of residues of 1,4-cyclohexanedimethanol. More preferably the glycol portion of the terephthalic acid derived copolyester contains from 75 to 35 mole % of ethylene glycol residues and from 25 to 65 mole % of residues of 1,4-cyclohexanedimethanol. Copolyester materials with this specification have a good transparency.

In referring to the various percentages of the respective starting components or residues thereof in the copolyester, these percentages represent approximately the relative amounts of the starting components of which the residues are incorporated as units in the respective copolyester molecules.

The copolyesters suitable for use in the composition of this invention may be prepared by any of the well known esterification techniques, such as for instance described in US patent no. 3 390 132, using an appropriate mixture of ethylene glycol and 1,4-cyclohexanedimethanol with terephthalic acid or an ester of terephthalic acid. The 1,4-cyclohexanedimethanol may be used in the cis or trans isomer form or a mixture thereof. The commercially available 30/70 cis/trans isomer mixture may be used advantageously.

Suitable copolyesters for use in the present composition are for example the commercially available Kodar™ PETG 6763 and Kodar™ PCTG 5445 (™trademark of Eastman Kodak Co.). These copolyesters give excellent properties in the compositions of the present invention.

The thermoplastic resin composition of this invention may generally contain from 99 to 1 parts by weight of the monovinyl aromatic monomer - unsaturated nitrile copolymer and from 1 to 99 parts by weight of copolyester. The composition preferably contains from 70 to 5 parts by weight, more preferably from 60 to 40 parts by weight, of a styrene-acrylonitrile copolymer and from 30 to 95 parts by weight, and more preferably from 40 to 60 parts by weight, of a copolyester derived from terephthalic acid, ethylene glycol and 1,4-cyclohexanedimethanol. These preferred blending ratios yield compositions that are characterized by an excellent balance of properties, such as an excellent contact clarity, a good processability and favorable economics. Further, these blending ratios yield a composition that is characterized by the

3

surprising combination of a very high elongation and a high flexural strength, tensile- and flexural modulus, resulting in an excellent balance between flexibility and rigidity, or in other words, a good practical toughness.

It will be evident for a person skilled in the art that a transparent composition of two materials may be obtained when the respective refractive indices are similar. As the refractive indices of both the starting compounds may vary slightly with the exact monomers composition of the respective compound, it shall be clear for the said person how to adjust the monomers composition of the respective starting compounds in order to get a transparent blend. Further it is noted that, although very often transparent compositions are preferred, the present invention also embraces non-transparent or partially transparent compositions, e.g. when the compositions per se are not transparent or in case fillers are used.

The compositions of this invention may be modified by one or more conventional additives such as heat and U.V. stabilizers, lubricants and mold release agents, colorants including dyes and pigments, fibrous, flake and particulate fillers and reinforcing materials, nucleating agents, flame retardants etc.

The compositions of the present invention are compatible over the whole blending range, but do not usually form an intimate molecular mixture. The present compositions consist of droplet- or ribbon-like structures (depending on the blending ratio) of one phase dispersed in the other phase. This especially enables the good mechanical properties of the starting compounds to be retained.

The compositions of the present invention may be prepared by blending the respective materials in various forms such as powder, granular, flake, pellet and the like. Any of the methods well known in the art can be employed in the preparation of the compositions of this invention. The starting materials may be separately comminuted and the two particulate materials are then mixed and heated until they form a homogeneous melt. Another method is stirring granules or pellets of one starting component into the melt of the other or mixing melts of the two starting components. Also co-precipitation from a solvent is a suitable technique. A particularly convenient method is by mixing the starting material powders or pellets in a melt extruder and extruding into for example a rod or strand which can be cut into pellets.

According to a second aspect the present invention relates to a shaped object of the thermoplastic resin composition of the present invention.

The shaped objects of the present invention may be formed by supplying individual components of the composition to the apparatus with which the shaped objects are prepared and having them therein combined in pellet or melted form or by starting from the previously prepared composition (in pellet or granular form).

Although, generally, any of the well known processing techniques may be used, it is particularly preferred that shaped objects are produced by injection molding or extrusion-thermoforming the composition of the present invention. Injection molding of the composition may, in general, be carried out under conditions similar to those normally used for injection molding of the monovinyl aromatic monomer-unsaturated nitrile copolymer.

The following examples illustrate the thermoplastic resin compositions of the present invention and are not intended as a limitation on the scope thereof:

Examples 1 - 4 and Comparative Examples 5 and 6

In the Examples 1-4 the styrene-acrylonitrile copolymer resin and the copolyester resin were pre-dried at 80° C during 3 hours and then tumble mixed in the desired blending ratios. After that, without further preparation steps the dry-blended compositions were injection molded into standard test specimens using a Klockner Ferromatic 60-ton injection molding machine. The injection molding conditions were as follows: nozzle temperature: 250°C; front zone, middle zone and rear zone temperatures: 240°C, 230°C and 220°C, respectively; mold temperature 50°C. The injection time and cycle time were 0.9 s and 42 s, respectively. The screw speed was 35 RPM.

In all the Examples 1-4 Kodar PETG 6763 was the copolyester component used and the styrene-acrylonitrile copolymer component used was the TYRIL 867E SAN resin (acrylonitrile content of about 25 parts by weight), the properties of these resins being mentioned in Table A hereinafter. The Kodar PETG 6763 has a glass transition temperature of about 81 °C and a number average molecular weight of about 26,000. The copolyester is derived from terephthalic acid, ethylene glycol and 1,4-cyclohexanedimethanol and contains about 30 mole % of 1,4-cyclohexanedimethanol residues, based on the glycol portion of the copolyester.

The blending ratios expressed in parts by weight of the TYRIL 867E styrene-acrylonitrile copolymer (SAN): parts by weight of the Kodar PETG 6763 copolyester (PETG) are also given in the Table A.

4

The following properties were determined by the test methods specified hereunder

Melt flow index in grams per 10 minutes (g/10 min) was determined according to ISO 1133;

Tensile strength at yield, tensile strength at break, tensile modulus (all in MPa), elongation at yield, elongation at break (both in %) according to ISO R527;

Flexural strength and modulus (both in MPa) according to ISO 178;

Izod impact (notched) (in J/m) according to ISO R180;

Charpy impact (notched and unnotched) (both in $kJ/m^2$) according to ISO 179;

Vicat softening point at 1kg/120°C (in °C) according to ISO 306A;

Heat distortion temperature at 0.45 MPa) (in °C) according to ISO 75A;

Light transmission was measured by using to Dr. Lange's Transparanzmesskopf; the % transmission was measured against a glass reference and with 2.0 mm thick plaques. The results of these tests are given in Table A hereafter.

According to the same procedure described for Examples 1-4 above standard test specimens were prepared except that in Comparative Examples 5 and 6 only TYRIL 867E styrene-acrylonitrile copolymer and Kodar PETG 6763 copolyester, respectively, were used. The test specimens then were subjected to the same tests as in Examples 1-4. The results are also described in Table A hereafter.

From these results it may be concluded that the compositions of the present invention give favorable mechanical and thermal properties. More specifically, the favorable combination of elongation at yield, flexural strength, tensile- and flexural modulus give the shaped object made from these compositions the desired practical toughness.

## TABLE A

| Example No | 5(Comp.) | 1 | 2 | 3 | 4 | 6(Comp.) |
|---|---|---|---|---|---|---|
| wt parts SAN : wt parts PETG | 100:0 | 80:20 | 60:40 | 40:60 | 20:80 | 0:100 |
| Melt flow index (g/10 min) | 4.5 | - | 8.5 | 9.5 | - | 12.0 |
| Tensile str. at yield (5mm/min) (MPa) | 72.0 | 67.6 | 65.4 | 57.0 | 50.4 | 43.3 |
| Tensile str.. at break (5mm/min) (MPa) | 72.0 | 67.5 | 50.7 | 40.7 | 41.5 | 39.9 |
| Tensile modulus (1mm/min) (MPa) | 3700 | 3427 | 3080 | 2591 | 2177 | 1910 |
| Elong. at yield (%) (5mm/min) | 2.6 | 2.6 | 3.5 | 8.0 | 7.8 | 6.7 |
| Elong. at break (%) (5mm/min) | 2.6 | 2.6 | 12.9 | 218.9 | 277 | 350 |
| Flexural strength (MPa) | 106 | 107.2 | 101.7 | 91.1 | 79.8 | 68.3 |
| Flexural modulus (MPa) | 3159 | 2758 | 2602 | 2311 | 1884 | 1781 |
| Izod impact (notched) (J/m) | 13.0 | 10.3 | 13.7 | 15.3 | 22.5 | 80 |
| Charpy impact (notched) ($kJ/m^2$) | 0.95 | 0.7 | 1.14 | 1.56 | 2.02 | 3.70 |
| Charpy impact (unnotched) ($kJ/m^2$) | 17.0 | 11.0 | 15.1 | 38.5 | no break | no break |
| Vicat (°C) | 108 | 106.6 | 106.1 | 99.1 | 86.2 | 81.5 |
| HDT (°C) | 97 | 95 | 92.7 | 80.8 | 75.8 | 71 |
| Light transmission (%) | 90.4 | 87 | 86 | 83.5 | 83 | 90.7 |

Examples 7-10 and Comparative Examples 11 and 12

According to the same procedure as described in Examples 1-4 blends were prepared from TYRIL 605 SAN copolymer and Kodar PCTG 5445 copolyester (Examples 7-10). The TYRIL 605 SAN copolymer has an acrylonitrile content of about 33 parts by weight. The Kodar PCTG 5445 copolyester is derived from terephthalic acid, ethylene glycol and 1,4-cyclohexanedimethanol and contains about 55-60 mole % of 1,4-cyclohexanedimethanol residues (based on the copolyester glycol portion).

The blending ratios as well as the properties of the blends are mentioned in Table B. It is noted that for all the properties the same test procedures were used as in Examples 1-4 and Comparative Examples 5 and 6 , except for the following deviations:

The light transmission value, which was measured at 4 mm thick samples.

The Izod impact (notched) (in J/m) was measured according to ISO 5110.

The Vicat softening point was measured at 5 kg/50° C.

The heat distortion temperature was measured at 1.82 MPa.

In Comparative Examples 11 and 12, respectively, the results for the pure components TYRIL 605 SAN copolymer and Kodar PCTG 5445 copolyester, respectively, are given.

TABLE B

| Example No | 11(Comp.) | 7 | 8 | 9 | 10 | 12(Comp.) |
|---|---|---|---|---|---|---|
| wt parts SAN : wt parts PCTG | 100:0 | 80:20 | 60:40 | 40:60 | 20:80 | 0:100 |
| Tensile str. at yield (5mm/min) (MPa) | 78 | 72.1 | 67.1 | 58.9 | 49.1 | 40 |
| Tensile str. at break (5mm/min) (MPa) | 78 | 72.0 | 37.6 | 37.6 | 39.0 | 37 |
| Tensile modulus (1mm/min) (MPa) | 3800 | 3453 | 2977 | 2552 | 2036 | 1630 |
| Elong. at yield (%) (5mm/min) | - | 3.0 | 3.4 | 6.8 | 7.8 | - |
| Elong. at break (%) (5mm/min) | 3.0 | 3.1 | 42.7 | 144.1 | 205.5 | 257 |
| Flexural strength (MPa) | 120 | 113.5 | 100.4 | 92.4 | 76.6 | 63 |
| Flexural modulus (MPa) | - | 3160 | 2853 | 2576 | 2107 | 1695 |
| Izod impact (notched) (J/m) | 14 | 14.6 | 15.0 | 25.4 | 38.6 | 90 |
| Vicat ($^\circ$C) | 102 | 98.8 | 93.0 | 84.0 | 81.7 | 80.8 |
| HDT ($^\circ$C) | 100 | 80.9 | 77.3 | 80.9 | 77.3 | 65.3 |
| Light transmission (%) | 84 | 79.7 | 76.3 | 75.8 | 78.3 | 86 |

Examples 13-19

In these Examples 13-19 the mechanical properties are measured of a blend of 50 parts by weight of the Kodar PETG 6763 copolyester resin and 50 parts by weight of styrene-acrylonitrile copolymers with varying acrylonitrile contents.

The test specimens were prepared in the same manner as described in Examples 1-4. The test methods used were the same as described for the respective properties in Examples 1-4.

As styrene-acrylonitrile copolymer were used:

in example VII SAN XZ 86637.00 with an acrylonitrile content of about 20 parts by weight;

in example VIII Tyril 867E styrene-acrylonitrile copolymer resin with an acrylonitrile content of about 25 parts by weight;

in example IX Tyril 803 styrene-acrylonitrile copolymer resin with an acrylonitrile content of about 25 parts by weight;

in example X Tyril 790 styrene-acrylonitrile copolymer resin with an acrylonitrile content of about 29 parts by weight;

in example XI SAN XZ 86630.00 resin with an acrylonitrile content of about 33 parts by weight;

in example XII SAN XZ 95106.00 resin with an acrylonitrile content of about 33 parts by weight;

in example XIII Asahi T8302 styrene-acrylonitrile copolymer resin with an acrylonitrile content of about 40 parts by weight.

The results of the tests, as an average of five replicates, are given in Table C.

As can be seen from Table C, the mechanical properties increase with increasing acrylonitrile content in the styrene-acrylonitrile copolymer, whereas the clarity of the test specimens is the best in the acrylonitrile content range from 25 to 33 parts by weight.

TABLE C

| Example No. | 13 | 14 | 15 | 16 | 17 | 18 | 19 |
|---|---|---|---|---|---|---|---|
| SAN acrylonitrile content (parts by weight) | 20 | 25 | 25 | 29 | 33 | 33 | 40 |
| Izod (notched) (J/m) | 14.7 | 15.3 | 16.4 | 16.4 | 17.0 | 19.0 | 18.4 |
| Charpy (notched) (kJ/m$^2$) | 1.14 | 1.16 | 1.15 | 1.08 | 1.26 | 1.23 | 1.09 |
| Tensile Str. at yield (5mm/min) (MPa) | 59 | 63 | 62 | 64 | 63 | 64 | 63 |
| Elongation at yield (%) (5mm/min) | 5 | 6.3 | 6.2 | 6.4 | 6.4 | 6.2 | 6.5 |
| Elongation at break (%) (5mm/min) | 5 | 110 | 74[1] | 161 | 140 | 133 | 200 |
| Light transmission (%) | 72 | 83 | 84 | 87 | 82 | 80 | 76 |

([1]: low value due to plasticizer)

## Claims

1. Thermoplastic resin composition comprising from 1 to 99 parts by weight of a monovinyl aromatic monomer-unsaturated nitrile copolymer wherein the monovinyl aromatic monomer content varies from about 20 to 98 parts by weight and the unsaturated nitrile content from about 80 to 2 parts by weight, and from 99 to 1 parts by weight of a copolyester derived from an aromatic polycarboxylic compound, ethylene glycol and an additional glycol selected from the group of aliphatic and cycloaliphatic glycols having from 3 to 20 carbon atoms, 2,2-dimethyl-1,3-propanediol being excluded, the glycol portion of the copolyester containing about 97 to 5 mole % of ethylene glycol residues and about 3 to 95 mole % of residues of the additional glycol.

2. Thermoplastic resin composition according to claim 1 wherein the monovinyl aromatic monomer-unsaturated nitrile copolymer is a styrene-acrylonitrile copolymer having an acrylonitrile content from about 10 to 50 parts by weight and a styrene content from about 90 to 50 parts by weight.

3. Thermoplastic resin composition according to claim 2 wherein the acrylonitrile content of the styrene-acrylonitrile copolymer lies between 20 and 40 parts by weight.

4. Thermoplastic resin composition according to claim 1 wherein the aromatic polycarboxylic compound is terephthalic acid or a derivative thereof and the additional glycol in the copolyester glycol portion is 1,4-cyclohexanedimethanol.

5. Thermoplastic resin composition according to claim 4 wherein the glycol portion of the terephthalic acid derived copolyester contains from 80 to 20 mole % of residues of ethylene glycol and from 20 to 80 mole % of residues of 1,4-cyclohexanedimethanol.

6. Thermoplastic resin composition according to claim 5 wherein the glycol portion of the terephthalic acid derived copolyester contains from 75 to 35 mole % of residues of ethylene glycol and from 25 to 65 mole % of residues of 1,4-cyclohexanedimethanol.

7. Thermoplastic resin composition according to claim 1 comprising from 70 to 5 parts by weight of a styrene-acrylonitrile copolymer and from 30 to 95 parts by weight of a copolyester derived from terephthalic acid, ethylene glycol and 1,4-cyclohexanedimethanol.

8. Thermoplastic resin composition according to claim 7 comprising from 60 to 40 parts by weight of the styrene-acrylonitrile copolymer and from 40 to 60 parts by weight of the copolyester derived from terephthalic acid, ethylene glycol and 1,4-cyclohexanedimethanol.

9. Shaped object of any of the thermoplastic resin compositions of claims 1 to 8.

10. Shaped object according to claim 9 produced by injection molding or extrusion-thermoforming.

11. Shaped object according to claim 9 wherein the object is transparent.